# EUROPÄISCHE PATENTSCHRIFT

(11) **EP 1 281 639 B1**
(45) Veröffentlichungstag und Bekanntmachung des Hinweises auf die Patenterteilung: **05.04.2006**
(21) Anmeldenummer: 02017315.9
(22) Anmeldetag: 01.08.2002
(51) Int. Cl.: B65G 15/54

(54) **Transportband sowie Verfahren zur Herstellung eines derartigen Bandes**
Conveyor belt and method for producing same
Bande transporteuse et sa méthode de realisation

(30) Priorität: 01.08.2001 DE 10137362
(43) Veröffentlichungstag der Anmeldung: 05.02.2003
(73) Patentinhaber: Pallas GmbH & Co. KG Oberflächentechnik, 52146 Würselen (DE); GKD-Gebr. Kufferath AG, 52353 Düren (DE)
(72) Erfinder: Pauly, Peter, 52355 Düren (DE); Esser, Frank, 52353 Düren (DE); Kalawrytinos, Georg, Dr., 52222 Stolberg (DE); Jansen, Christoph, Dr., 52146 Würselen (DE)
(74) Vertreter: Castell, Klaus

(56) Entgegenhaltungen:
- DE-A- 2 822 141
- DE-A- 4 115 615
- FR-A- 2 198 876
- GB-A- 845 221
- US-A- 4 328 750

## Beschreibung

Die Erfindung betrifft ein Lochband vorzugsweise aus Metall, mit angebrachter Antihaftbeschichtung sowie Verfahren zur Herstellung eines derartigen Bandes.

Lochbänder, insbesondere metallische Lochbänder, sind unter anderem als Transportbänder bekannt. Sie dienen insbesondere dem Transport von Teilen oder Gut durch Sortier- oder Reinigungsanlagen oder durch Öfen. Derartige Bänder sind allerdings auch für ganz andere Fälle geeignet.

Die Bänder weisen Löcher auf, die verschiedenen Zwecken dienen. So können derartige Bänder mit ihren Löchern Sieb- bzw. Rückhaltefunktionen ausüben, wobei Materialien mit einer Ausdehnung größer als diese Löcher durch die Bänder zurückgehalten werden. Darüber hinaus können derartige Löcher auch lediglich einer Materialreduktion und somit einer Gewichtsersparnis dienen. Andererseits ermöglichen es derartige Löcher, dass die Bänder auch von der Rückseite her gereinigt werden können, indem eine Flüssigkeit oder ähnliches durch die Bänder hindurchgespritzt wird, welche an den Bändern anhaftende Partikel mitreißt.

Es ist Aufgabe vorliegender Erfindung, gattungsgemäße Lochbänder bereitzustellen, die gegenüber aus dem Stand der Technik bekannten Bändern (Siche z.B. das Dokument DE-A-4115615) einfacher zu reinigen sind. Darüber hinaus ist es Aufgabe vorliegender Erfindung, ein Verfahren zur Herstellung derartiger Lochbänder bereitzustellen.

Als Lösung schlägt die Erfindung einerseits ein Lochband mit einer wenigstens einseitig aufgebrachten Antihaftbeschichtung vor, bei dem das Lochband durchgängig Löcher aufweist und wenigstens ein Loch bzw. wenigstens eine Masche wenigstens einen Zwickel aufweist, in welchem die Antihaftbeschichtung vorgesehen ist.

Gerade in einem derartigen Zwickel kann es zu adhäsiven Effekten kommen, die durch die erfindungsgemäße Antihaftbeschichtung vorteilhaft vermindert bzw. vermieden werden können.

Vorzugsweise weist die Antihaftbeschichtung in dem Zwickel einen stetigen Oberflächenverlauf auf, so dass durch die Antihaftbeschichtung das entsprechende Zwickel überdeckt wird. Auf diese Weise können derartige Zwickel in ihrer materialsammeinden Eigenschaft vollends eliminiert werden. Es versteht sich, dass es möglicherweise ausreicht, wenn die Antihaftbeschichtung in dem Zwickel in lediglich einer Dimension, beispielsweise senkrecht zur Bandfläche, einen stetigen Oberflächenverlauf aufweist. Ein derartiger, stetiger Oberflächenverlauf verhindert effektiv irgendwelche Kanten oder Einkerbungen, in welchen sich Material anlagern kann. Vorzugsweise ist der Oberflächenverlauf auch in seiner Krümmung, (mathematisch erste Ableitung) stetig, wodurch Kanten bzw. Einkerbungen weitestgehend unterbunden werden. Es ist andererseits denkbar, dass ein entsprechender Oberflächenverlauf auch in mehreren Dimensionen vorgesehen ist.

Aus der Entgegenhaltung DE 144 56 15 A1 ist ein Lochband mit einer Antihaftbeschichtung bekannt. Bei diesem Lochband sind jedoch keine durchgehenden Löcher vorgesehen, so dass dieses Band die Vorteile eines mit durchgehenden Löchern versehenden Lochbandes nicht aufweist.

Eine derartige Antihaftbeschichtung hat sich überraschender Weise insbesondere im Bereich der Löcher als besonders vorteilhaft erwiesen. Hierbei erleichtert eine derartige Antihaftbeschichtung insbesondere ein Reinigen des Bandes, wenn dieses einer Wärme- oder Druckbelastung unterworfen ist, da eine derartige Belastung insbesondere im Bereich der Löcher verstärkt zum Anhaften von Materialien an dem Band führt. Insbesondere ist eine derartige Antikhaftbeschichtung in der Lage, die Ränder der Löcher bzw. kleinere, im Bereich der Löcher auftretende Oberflächenstrukturen, wie Grate, Zwickel oder Umschlingungen, zu überdecken bzw. in ihrer adhäsiven Wirkung abzuschwächen. Hierdurch lassen sich bei den erfindungsgemäßen Lochbändern in unerwarteter Weise Reinigungsarbeiten vermeiden bzw. in ihrem Umfang oder in ihrem Aufwand reduzieren.

Die Erfindung eignet sich insbesondere für Bänder, die Maschen aufweisen. Derartige Bänder haben verhältnismäßig große Oberflächenbereiche im Gebiet der Löcher bezüglich der Gesamtoberfläche des Bandes, da derartige Bänder in der Regel lediglich aus Maschen bestehen. Bei derartigen Bändern kommen die Vorteile einer erfindungsgemäßen Antihaftbeschichtung besonders zum Tragen, da die Antihaftbeschichtung adhäsiven, durch die Maschen bedingten Effekten entgegenwirken kann.

Insbesondere kann die Antihaftbeschichtung derart ausgestaltet sein, dass sie wenigstens zwei überlappende, maschenbildende Teilbereiche des Bandes verbindet. Derartige Teilbereiche können beispielsweise die Teilbereiche von Fäden, Bändern, Seilen, Drähten oder Stäben, sein, welche sich im Bereich der Masche berühren. Derartige, das Band bildende Bandelemente, wie Fäden, Bänder, Seile, Drähte oder Stäbe, können zur Bandbildung beispielsweise miteinander verwoben, umschlungen oder sonst wie miteinander verbunden sein, wobei - gegebenenfalls - ein Bandelement auch mit sich selbst verbunden sein kann. Darüber hinaus können die Teilbereiche im Bereich dieser Verbindung auch fest miteinander verbunden sein, was beispielsweise durch Verschweißen, Verkleben oder ähnliche Maßnahmen geschehen kann. Insofern sind bei einem Maschen aufweisenden Band häufig gerade im Bereich der Maschen Oberflächenstrukturen zu finden, an welchen es zu unerwünschten Adhäsionseffekten kommen kann.

Durch die erfindungsgemäße Antihaftbeschichtung kann in vorteilhafter Weise gerade in diesen Bereichen derartigen Effekten entgegengewirkt werden.

Dementsprechend eignet sich vorliegende Erfindung insbesondere für Bänder, die eine Bandfläche aufweisen und wenigstens zwei Teilbereiche eines oder zweier Bandelemente aus denen das Band gebildet ist, umfassen, wobei die zwei Teilbereiche senkrecht zur Bandfläche überlappen. Gerade im Bereich derartiger Teilbereiche treten Strukturen, wie Zwickel, Druckstellen, Lot- oder Schweißpunkte oder ähnliches auf, die zu unerwünschten, adhäsiven Effekten führen. Insofern führt die erfindungsgemäße Antihaftbeschichtung gerade in diesen Bereichen zu unerwarteten Erfolgen hinsichtlich der Reinigungsfähigkeit bzw. -notwendigkeit eines derartigen Bandes.

Die Antihaftbeschichtung ist besonders wirksam, wenn sie zwischen den beiden Teilbereichen durchgängig ausgebildet ist. Auf diese Weise kann sie besonders wirkungsvoll einem Anhaften von Material gerade in diesem Übergangsbereich entgegenwirken. Es versteht sich in diesem Zusammenhang, dass eine derartige, durchgängige Ausbildung lediglich in eine Richtung bzw. eine Dimension ausgebildet sein braucht, um die erfindungsgemäßen Vorteile zu bieten. Andererseits kann durch einen flächig durchgängigen Übergang die anti-adhäsive Wirkung verstärkt werden. Darüber hinaus versteht es sich, dass die Antihaftbeschichtung zwischen den beiden Teilbereichen nicht zwingend einstückig ausgebildet sein muss. Dieses ist jedoch vorteilhaft, da hierdurch besonders wirkungsvoll Stellen, an welchen Materialien haften können, vermieden werden. Andererseits kann die Antihaftbeschichtung in derartigen Bereichen durchaus gerissen bzw. aufgebrochen sein. Derartige Risse sind im gestreckten Zustand des jeweiligen Bandes von nur untergeordneter Bedeutung, so dass sie die anti-adhäsive Wirkung der erfindungsgemäßen Antihaftschicht nicht bzw. nur unwesentlich beeinflussen. Dieses gilt insbesondere für umlaufende Bänder, bei welchen derartige Risse bzw. Aufbrüche lediglich in den Umlenkbereichen sichtbar bzw. zu nachweisbaren Effekten führen. Derartige Umlenkbereiche sind jedoch in der Regel nicht mehr mit den jeweilig transportierten Materialien in Kontakt.

Das Band kann auf jede denkbare Weise, wie beispielsweise durch Schlingen oder Weben und ähnliche Maßnahmen, hergestellt werden. Insbesondere bei gewebten Bändern ist vorliegende Erfindung vorteilhaft einsetzbar, da die erfindungsgemäße Antihaftbeschichtung an den Kontaktstellen zwischen Kette und Schuss einer Anlagerung von Material vorteilhaft entgegenwirkt. Als Bandelemente können insbesondere Fäden, Bänder, Seile, Drähte oder Stäbe zur Anwendung kommen. Bei geeigneter Wahl der Antihaftbeschichtung kann diese auch - zumindest in gewissen Grenzen - einer Gewebebewegung folgen, so dass auch bei einer Bandbewegung die Antihaftbeschichtung erhalten bleibt.

Je nach konkreten Anwendungsfall kann die Antihaftbeschichtung während des Gebrauchs des erfindungsgemäßen Bandes an dessen Oberfläche abnutzen. Gleichwohl bleiben die Vorteile der Antihaftbeschichtung insbesondere im Bereich der Maschen, der Kontaktstellen bzw. der Zwickel erhalten.

Vorzugsweise kann die Antihaftbeschichtung PTFE (Polytetrafluorethylen) umfassen. Dieses Material eignet sich, insbesondere auch in Verbindung mit anderen Materialien, besonders als Antihaftbeschichtung. Ebenso kann Silikon zur Anwendung kommen. Auch ist es denkbar, Nanopartikel, also Kleinstpartikel, die eine entsprechende antihaftende Oberflächenstruktur bilden, aufzutragen und entsprechend an dem Band zu fixieren.

Ein besonders stabiler und dennoch ausreichend elastischer Verbund zwischen dem Bandmaterial und der Antihaftbeschichtung folgt, wenn die Antihaftbeschichtung auf- bzw. eingesintert wird. Hierbei können vorzugsweise Temperaturen zwischen 150 °C und 500 °C zur Anwendung kommen.

Das Auftragen der Antihaftbeschichtung erfolgt vorzugsweise erst nachdem die Bandstruktur erzeugt, das Band also beispielsweise gewebt, ist. Wird anschließend die Antihaftbeschichtung aufgebracht, kann diese auf besonders effektive Weise Kontaktstellen, Maschen bzw. Zwickel besetzen. Darüber hinaus wird die Antihaftbeschichtung während der Herstellung der Bandstruktur, beispielsweise während des Webens, nicht beansprucht. Auch beeinflusst bei einer derartigen Verfahrensführung die Antihaftbeschichtung den Herstellungsprozess der Bandstruktur, wie beispielsweise das Weben, nicht nachteilig, wie dieses beispielsweise durch einen erhöhten Schlupf geschehen könnte. Es versteht sich andererseits, dass - je nach konkreter Verfahrensführung - die Antihaftbeschichtung vor der Herstellung der Materialstruktur auf die jeweiligen Bandelemente aufgebracht werden kann.

Vorzugsweise wird die Antihaftbeschichtung in flüssiger Form auf das Bandmaterial aufgebracht. Ein derartiger Auftrag in flüssiger Form führt zu einer stetigen Oberfläche der Antihaftbeschichtung bzw. zu einer stetigen Krümmung der Oberfläche der Antihaftbeschichtung bedingt durch adhäsive und kohäsive Flüssigkeitseffekte. Ein derartiger Oberflächenverlauf hat, ergänzend zu der antihaftenden Wirkung der erfindungsgemäßen Antihaftbeschichtung, einen antihaftenden Effekt.

Der Auftrag der Antihaftbeschichtung gestaltet sich als besonders einfach, wenn diese auf das Bandmaterial aufgespritzt wird.

Der Auftrag in flüssiger Form bzw. ein Aufspritzen ist insbesondere in Verbindung mit PTFE, Silikon bzw. Nanopartikeln, besonders auch unabhängig von den übrigen Merkmalen der Erfindung, entsprechend vorteilhaft. Hierbei können geeignete Lösungs- bzw. Trägermittel, wie beispielsweise auch Wasser zur Suspension der Nanopartikel, genutzt werden, die anschließend verdampfen oder sonst wie inaktiviert werden.

Vorzugsweise ist die Antihaftbeschichtung dünner als die übrigen Bestandteile des Bandes, wie beispielsweise Kette- und Schuss in einem Gewebe oder Draht- bzw. Seilumschlingungen, ausgebildet. Bei einer derartigen Anordnung verbleibt die Antihaftbeschichtung ausreichend elastisch, wodurch beispielsweise die Gefahr des Abplatzens verringert wird. Die antihaftenden Eigenschaften kommen dennoch ausreichend zum Tragen. Darüber hinaus beeinflusst eine derartig dünn ausgestaltete Antihaftbeschichtung die sonstigen Eigenschaften des Bandes, wie beispielsweise dessen Elastizität und dessen Maschenweite bzw. Lochdurchmesser, nur unwesentlich.

In vorliegendem Zusammenhang beschreibt der Begriff "Band" jede im Wesentlich zweidimensionale Anordnung, die zumindest senkrecht hierzu elastisch verformbar ist und in eine dieser Dimensionen wesentlich länger ausgebildet ist als in die andere Dimension. Insbesondere umfasst der Begriff "Band" derartige Anordnungen, die endlos - also als umlaufendes Band - ausgestaltet sind. In diesem Zusammenhang beschreibt der Begriff "Bandfläche" die Oberfläche des Bandes parallel zu den genannten Dimensionen bzw. eine hierzu parallele Oberfläche, die innerhalb des Bandes liegt.

Die Erfindung eignet sich insbesondere für Transportbänder, die beispielsweise für den Transport durch Öfen zur Anwendung kommen.

Durch die erfindungsgemäße Antihaftbeschichtung können insbesondere auch metallische Bandstrukturen vorteilhaft genutzt werden. Metallische Bänder zeichnen sich durch ihre hohe Widerstandskraft, durch ihre hohe Belastbarkeit sowie durch ihre hohe Lebensdauer aus. Allerdings neigen sie häufig zu Verschmutzungserscheinungen, die insbesondere durch raue Oberflächen, durch die Maschen und durch Anbackeffekte bedingt sind.

Durch vorliegende Erfindung kann derartigen Nachteilen wirkungsvoll begegnet werden. Insbesondere ermöglicht es vorliegende Erfindung, als Bandelemente Elemente aus Guss- bzw. Edelstahl zu verwenden, so dass vorliegende Erfindung beispielsweise bei einem gewebten Guss- bzw. E-delstahlband vorteilhaft zur Anwendung kommen kann.

Weitere Vorteile, Ziele und Eigenschaften vorliegender Erfindung werden in der Beschreibung anliegender Zeichnung nachfolgend erläutert, in welcher beispielhaft ein erfindungsgemäßes Lochband dargestellt ist. In der Zeichnung zeigen:
- Figur 1: ein erfindungsgemäßes Lochband in Aufsicht;
- Figur 2: das erfindungsgemäße Lochband in einer Seitenansicht und
- Figur 3: das erfindungsgemäße Lochband im Schnitt.

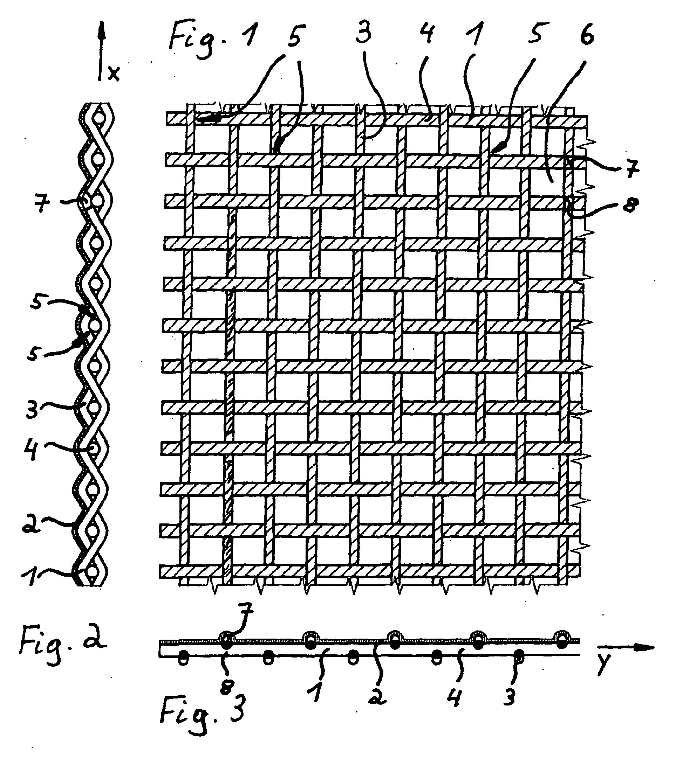

Das in den Figuren 1 bis 2 dargestellte Lochband umfasst ein Gewebe 1 aus Gussstahl, welches mit einer PTFE umfassenden Antihaftbeschichtung 2 versehen ist. Das Gewebe 1 besteht aus Ketten 3 (exemplarisch beziffert) und Schüssen 4 (exemplarisch beziffert), die jeweils aus Gussstahldrähten bzw. -stäben gebildet sind. Die Ketten 3 sind hierbei ringartig geführt und mit sich selbst verbunden, so dass ein endloses Transportband gebildet ist.

Wie aus Figuren 2 und 3 ersichtlich, ist die Antihaftbeschichtung 2 lediglich einseitig auf das Gewebe 1 aufgebracht. Dieses erfolgte durch Aufspritzen, nachdem die Ketten 3 und die Schüsse 4 verwoben wurden. Nach dem Aufspritzen wurde die Anordnung wärmebehandelt und auf diese Weise die Antihaftbeschichtung 2 aufgesintert. Wie unmittelbar ersichtlich, überzieht die Antihaftbeschichtung 2 das Gewebe 1, bedingt durch den Aufsprühvorgang, gleichmäßig und füllt insbesondere auch etwaige Zwickel 5, die insbesondere im Bereich der Löcher bzw. Maschen 6 auftreten können, gleichmäßig. Hierdurch können insbesondere leichte Rundungen im Bereich der ansonsten rechteckigen Maschen auftreten. Auch kann dieses auch einen gleichmäßigen bzw. abgerundeteren Oberflächenverlauf bedingen, wie dieses in Figuren 2 und 3 angedeutet ist. Der hierdurch bedingte, glattere Verlauf der Oberfläche wirkt kumulativ zur antihaftenden Wirkung der Antihaftschicht, so dass ein derartiges Band überraschend leicht ereinigt werden kann. Wie aus Figuren 2 und 3 ersichtlich ist die Antihaftbeschichtung 2 dünner als die Schüsse 3 bzw. die Ketten 4 ausgebildet, wodurch dessen Elastizität erhalten bleibt und sich die Weite der Maschen 6 nur unwesentlich verringert.

Wie unmittelbar ersichtlich, erstreckt sich das in Figuren 1 bis 3 dargestellte Lochband im Wesentlichen entlang der Dimensionen x (siehe Figur 2) und y (siehe Figur 3). In x-Richtung ist das Band in hier nicht dargestellter, aber allgemein bekannter Weise geschlossen, wie bereits vorstehend erläutert. Senkrecht zu der aus x und y gebildeten Ebene ist das Band elastisch bzw. biegbar. Darüber hinaus weisen die das Band bildenden Bandelemente 3, 4 jeweils Teilbereiche 7, 8 auf, die senkrecht zu der x-y-Ebene einander überlappen (siehe insbesondere Figur 3).

## Patentansprüche

1. Lochband vorzugsweise aus Metall, mit wenigstens einseitig aufgebrachter Antihaftbeschichtung, ***dadurch gekennzeichnet*, *dass*** das Lochband durchgehende Löcher aufweist und wenigstens ein Loch bzw. wenigstens eine Masche und wenigstens einen Zwickel aufweist, in welchem die Antihaftbeschichtung vorgesehen ist.

2. Band nach Anspruch 1, ***dadurch gekennzeichnet, dass*** die Antihaftbeschichtung (2) in dem Zwickel (5) einen stetigen Oberflächenverlauf aufweist.

3. Band nach Anspruch 1 oder 2, ***dadurch gekennzeichnet, dass*** die Antihaftbeschichtung (2) wenigstens zwei überlappende, die Maschen (6) bildende Teilbereiche (7, 8) des Bandes verbindet.

4. Band nach einem der Ansprüche 1 bis 3, ***dadurch gekennzeichnet, dass*** das Band eine Bandfläche aufweist und wenigstens zwei Teilbereiche (7, 8) eines oder zweier Elemente (3, 4), aus welchen das Band gebildet ist, umfasst, wobei die zwei Teilbereiche (7, 8) senkrecht zur Bandfläche überlappen.

5. Band nach Anspruch 3 oder 4, ***dadurch gekennzeichnet, dass*** die Antihaftbeschichtung (2) zwischen den beiden Teilbereichen (7, 8) durchgängig ausgebildet ist.

6. Band nach einem der Ansprüche 1 bis 5, ***dadurch gekennzeichnet, dass*** das Band gewebt ist.

7. Band nach einem der Ansprüche 1 bis 6, ***dadurch gekennzeichnet, dass*** die Antihaftbeschichtung (2) PTFE und/oder Silikon umfasst.

8. Band nach einem der Ansprüche 1 bis 7, ***dadurch gekennzeichnet, dass*** die Antihaftbeschichtung (2) auf- bzw. eingesintert ist.

9. Band nach einem der Ansprüche 1 bis 8, ***dadurch gekennzeichnet, dass*** die Antihaftbeschichtung (2) dünner als die übrigen Bestandteile (3, 4) des Bandes ausgebildet ist.

10. Band nach einem der Ansprüche 1 bis 9, ***dadurch gekennzeichnet, dass*** das Band endlos ausgebildet ist.

11. Transportband nach einem der Ansprüche 1 bis 10.

12. Verfahren zur Herstellung eines Lochbandes nach einem der Ansprüche 1 bis 10, ***dadurch gekennzeichnet, dass*** auf das Band eine Antihaftbeschichtung (2) auf- bzw. eingesintert wird.

13. Verfahren zur Herstellung eines Lochbandes nach einem der Ansprüche 1 bis 10, ***dadurch gekennzeichnet, dass*** auf das Band eine Antihaftbeschichtung (2), beispielsweise aus Silikon oder Nanopartikeln, aufgespritzt wird.

14. Verfahren zur Herstellung eines Lochbandes nach einem der Ansprüche 1 bis 10, ***dadurch gekennzeichnet, dass*** die Antihaftbeschichtung aufragen wird, nach dem die Bandstruktur erzeugt ist.

## Revendications

1. Bande perforée, de préférence en métal, avec un revêtement antiadhésif appliqué sur au moins un côté, ***caractérisée en ce que*** la bande perforée comporte des trous traversants ainsi qu'au moins un trou ou au moins une maille et au moins un gousset, dans lequel est prévu le revêtement antiadhésif.

2. Bande selon la revendication 1, ***caractérisée en ce que*** le revêtement antiadhésif (2) comporte un sens de parcours continu à l'intérieur du gousset (5).

3. Bande selon la revendication 1 ou 2, ***caractérisée en ce que*** le revêtement antiadhésif (2) relie au moins deux parties (7, 8) de la bande qui se recouvrent et forment les mailles (6).

4. Bande selon l'une des revendications 1 à 3, ***caractérisée en ce que*** la bande comporte une surface de bande et comprend au moins deux parties (7, 8) d'un ou deux éléments (3, 4) à partir desquels est formée la bande, les deux parties (7, 8) se recouvrant perpendiculairement à la surface de bande.

5. Bande selon la revendication 3 ou 4, ***caractérisée en ce que*** le revêtement antiadhésif est conformé sans interruption entre les deux parties (7,8).

6. Bande selon l'une des revendications 1 à 5, ***caractérisée en ce que*** la bande est tissée.

7. Bande selon l'une des revendications 1 à 6, ***caractérisée en ce que*** le revêtement antiadhésif (2) comprend du PTFE et/ou de la silicone.

8. Bande selon l'un des revendications 1 à 7, ***caractérisée en ce que*** le revêtement antiadhésif (2) est fritté sur ou dans la bande.

9. Bande selon l'une des revendications 1 à 8, ***caractérisée en ce que*** le revêtement antiadhésif (2) est conformé plus fin que les autres composants (3, 4) de la bande.

10. Bande selon l'une des revendications 1 à 9, ***caractérisée en ce que*** la bande est conformée sans fin.

11. Bande transporteuse selon l'une des revendications 1 à 10.

12. Procédé de fabrication d'une bande perforée selon l'une des revendications 1 à 10, ***caractérisé en ce qu'***un revêtement antiadhésif (2) est fritté sur ou dans la bande.

13. Procédé de fabrication d'une bande perforée selon l'une des revendications 1 à 10, ***caractérisé en ce qu'***un revêtement antiadhésif en silicone ou en nano-particules est appliqué par projection sur la bande.

14. Procédé de fabrication d'une bande perforée selon l'une des revendications 1 à 10, ***caractérisé en ce que*** le revêtement antiadhésif est appliquée après que la structure de la bande ait été réalisée.

## Claims

1. A perforated belt, preferably made of metal, with a non-stick coating applied at least on one side, ***characterized in that*** the perforated belt comprises through-holes and at least one hole or at least one mesh and at least one gusset in which the non-stick coating is provided.

2. The belt according to claim 1, ***characterized in that*** the surface of the non-stick coating (2) runs continuously in the gusset (5).

3. The belt according to claim 1 or 2, ***characterized in that*** the non-stick coating (2) connects at least two overlapping portion (7, 8) of the belt, that form the meshes (6).

4. The belt according to one of the claims 1 to 3, ***characterized in that*** the belt comprises a belt surface and includes at least two portions (7, 8) of one or two of the elements (3, 4) of which the belt is made, the two portions (7, 8) overlapping perpendicular to the belt surface.

5. The belt according to claim 3 or 4, ***characterized in that*** the non-stick coating (2) is configured continuous between the two portions (7, 8).

6. The belt according to one of the claims 1 to 5, ***characterized in that*** the belt is woven.

7. The belt according to one of the claims 1 to 6, ***characterized in that*** the non-stick coating includes PTFE and/or silicone.

8. The belt according to one of the claims 1 to 7, ***characterized in that*** the non-stick coating is sintered onto or into the belt.

9. The belt according to one of the claims 1 to 8, ***characterized in that*** the non-stick coating is configured thinner than the other components (3, 4) of the belt.

10. The belt according to one of the claims 1 to 9, ***characterized in that*** the belt is configured endless.

11. A conveyor belt according to one of the claims 1 to 10.

12. A method for manufacturing a perforated belt according to one of the claims 1 to 10, ***characterized in that*** a non-stick coating (2) is sintered onto or into the belt.

13. The method for manufacturing a perforated belt according to one of the claims 1 to 10, ***characterized in that*** a non-stick coating (2) made for example of silicone or nanoparticles is sprayed onto the belt.

14. The method for manufacturing a perforated belt according to one of the claims 1 to 10, ***characterized in that*** the non-stick coating is applied after the structure of the belt has been produced.
